# EUROPEAN PATENT SPECIFICATION

(11) **EP 4 192 758 B1**
(45) Date of publication and mention of the grant of the patent: **24.07.2024**
(21) Application number: 21765710.5
(22) Date of filing: 06.08.2021
(51) Int. Cl.: B65D 81/32, B65D 21/02, B67D 7/02, B67D 7/04, B67D 7/84

(54) **TANK FOR THE TRANSPORT OF FUEL**
TANK FÜR DEN TRANSPORT VON KRAFTSTOFF
RÉSERVOIR DE TRANSPORT DE CARBURANT

(30) Priority: 06.08.2020 IT 202000019513
(43) Date of publication of application: 14.06.2023
(73) Proprietor: Emiliana Serbatoi S.r.l., 41011 Campogalliano (MO) (IT)
(72) Inventor: MORSELLI, Gian Lauro, 41011 Campogalliano (MO) (IT)
(74) Representative: Brunacci, Marco
(86) International application number: PCT/IB2021/057268
(87) International publication number: WO 2022/029710

(56) References cited:
- EP-A1- 3 594 175
- WO-A1-2017/175131
- CN-A- 110 329 060
- CN-A- 110 525 201
- US-A- 6 135 306
- US-A1- 2014 158 696
- US-A1- 2018 065 475

## Description

### Technical Field

The present innovation relates to a tank for the transport of fuel.

### Background Art

Tanks for the transport of fuel, e.g. diesel fuel, are well known which are composed of a hollow container, on which a pump is mounted connected in a fluid-operated manner inside the container and to a dispensing gun.

These transport tanks are used to supply agricultural vehicles or operating machines directly at the work site, e.g. a field, construction site or the like.

In actual facts, tanks of this type have been devised to be carried on the body of a truck or in the load compartment of a van or the like.

Currently, in compliance with recent regulations aimed at reducing the emission of nitrogen oxides into the environment from exhaust fumes, agricultural vehicles, commercial vehicles and various operating machines are provided with a tank in addition to the diesel tank, designed to contain an aqueous solution of urea or AdBlue^{®}.

In actual facts, these vehicles are fitted with a well-known system for the injection of a predefined amount of AdBlue^{®} directly into the exhaust fumes between the engine and the catalytic converter.

In this way, a large proportion of the nitrogen oxides are converted into nitrogen and water and dispersed in this form into the environment.

Of course, the AdBlue^{®} tank must also be refilled periodically.

For this reason, the market currently offers tanks which are provided with a tank for the transport of fuel and with a tank for the transport of AdBlue^{®}, combined together to facilitate the transport thereof.

In particular, in order to be able to supply vehicles on site provided with a nitrogen oxide abatement system, the tank used to transport AdBlue^{®} is fitted in a removable manner inside a suitable housing seat obtained inside the fuel tank. In this manner, the tanks provide a compact solution for the transport of fuel and AdBlue^{®}.

However, such tanks must meet manufacturing and quality requirements.

Among the requirements to be met, the strength of the tank to deformation and pressure is extremely important.

In fact, the fuel contained in the tank tends to evaporate, thus forming an accumulation of gas inside the volume of the tank itself.

This accumulation of gas causes an overpressure that puts considerable stress on the walls of the tank, and in case of malfunction of the primary safety system, could be dangerous.

Prolonged stress on the walls of the tank may lead to the deformation of the tank body, in some cases resulting in tank rupture with consequent fuel spillage. For this reason, in order to make the tanks more resistant and, therefore, less deformable, these are provided with external reinforcements.

Typically, these tanks are provided with metallic reinforcing elements which allows balancing the thrust exerted on the walls.

These tanks of known type do however have some drawbacks.

Indeed, the reinforcing elements with which they are provided are external elements which must be mounted on the tank or embedded in the material making up the tank itself.

Consequently, if the reinforcing elements are not fitted, the stability of the tank may be irreparably affected.

In addition, the fact that additional reinforcing elements have to be provided for the tank means that additional processing and assembly phases have to be carried out compared to normal production, which a consequent increase in the production costs.

Furthermore, in order to increase the strength of the walls of the tank, especially the internal ones which are directly subjected to overpressure, these are made thicker, which entails an increase in the quantity of material used, weight and manufacturing costs.

In addition, the use of the reinforcing elements and of the housing seat for the AdBlue^{®} tank significantly complicate the tank structure, thus reducing the maximum volume of fuel and AdBlue^{®} contained by the tank itself and increasing the weight thereof.

Other tanks for storing and transporting fuel and Adblue^{®} are known from EP 3 594 175 A1 and WO 2017/175 131 A1.

### Description of the Invention

The main aim of the present invention is to devise a tank for the transport of fuel, which allows for improved strength to overpressure and deformation. Within the illustrated aim, one object of the present invention is to devise a tank for the transport of fuel having a reinforced structure.

It is a further object of the present invention to devise a tank for the transport of fuel having an internal structure which gives considerable strength and robustness, irrespective of the application of additional reinforcing elements. An additional object of the present invention is to devise a tank for the transport of fuel which allows employing the housing seat for the AdBlue^{®} tank and the reinforcing elements without adversely affecting the structural complexity, weight and containment volumes of the fuel of the tank itself.

Another object of the present invention is to devise a tank for the transport of fuel which enables the aforementioned drawbacks of the prior art to be overcome within the framework of a simple, rational, easy and effective to use as well as affordable solution.

The aforementioned objects are achieved by the present tank for the transport of fuel having the characteristics of claim 1.

### Brief Description of the Drawings

Other characteristics and advantages of the present invention will become more apparent from the description of a preferred, but not exclusive, embodiment of a tank for the transport of fuel, illustrated by way of an indicative, yet nonlimiting example, in the accompanying tables of drawings wherein:
Figure 1 is an axonometric view of the tank according to the invention;

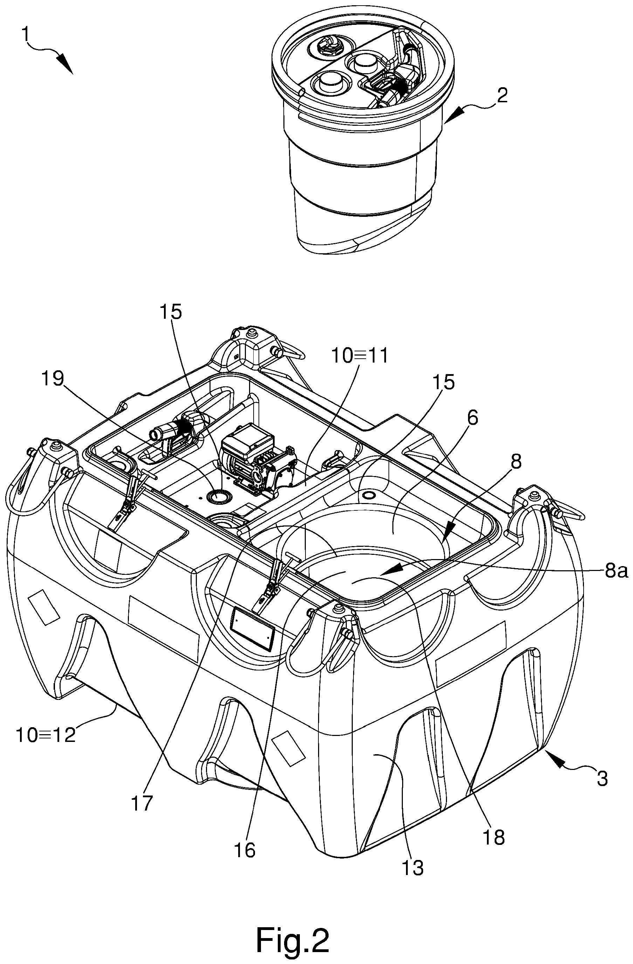

Figure 2 is an exploded view of the tank according to the invention;
Figure 3 is a cutaway view of the tank according to the invention;
Figure 4 is a cross-sectional view of the tank according to the invention.

### Embodiments of the Invention

With particular reference to these figures, reference numeral 1 globally indicates a tank for the transport of fuel.

The tank 1 comprises:
- at least a first container body 2 defining at least a first containment volume of at least one work fluid;
- at least a second container body 3 defining at least a second containment volume 4 of fuel and provided with at least one housing seat 6 inside which the first container body 2 is fitted in a removable manner.

Preferably, the fuel contained inside the second container body 3 is of the type of a liquid fuel, such as e.g. diesel fuel.

Furthermore, the work liquid contained inside the first container body 2 is of the type of an aqueous solution of urea or AdBlue^{®}.

According to the invention, the tank 1 comprises reinforcing means 7 of the second container body 3 provided with at least one reinforcing element 8, 9 positioned through inside the second containment volume 4 and adapted to counteract the deformation of the second container body 3.

Advantageously, the second container body 3 comprises at least one pair of containment walls 10 positioned substantially opposite each other to delimit at least partly the extension of the same second container body.

Furthermore, the reinforcing element 8, 9 is positioned between the pair of containment walls 10.

In this manner, the reinforcing element 8, 9 counteracts the action of moving away of the containment walls 10, thus preventing the second container body 3 from deforming.

In other words, the reinforcing element 8, 9 operates as a structural connecting element of the containment walls 10.

Preferably, the second container body 3 comprises an upper wall 11 and a lower wall 12 coinciding with the containment walls 10.

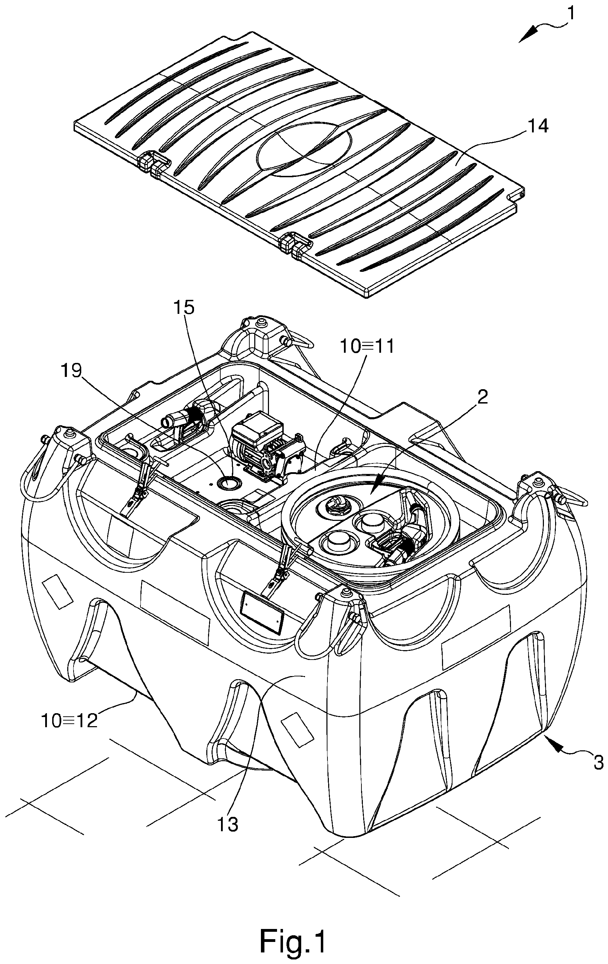

In particular, in the normal conditions of use of the tank 1, wherein the same is arranged in support of the ground, as shown in Figure 1, the lower wall 12 is arranged substantially at the bottom of the second container body 3 and substantially parallel to the ground, while the upper wall 11 is arranged on the top of the second container body 3 to be easily accessible by a user.

Furthermore, the second container body 3 comprises at least one lateral surface 13 positioned between the upper wall 11 and the lower wall 12, so as to define with the same substantially the clearance of the second container body 3.

Preferably, the reinforcing element 8, 9 is spaced apart from the lateral surface 13.

Advantageously, the first container body 2 is insertable inside the retractable housing seat 6.

In other words, when the first container body 2 is fitted inside the housing seat 6, it remains substantially coplanar to the upper wall 11.

In this way, when the first container body 2 is fitted inside the housing seat 6, the second container body 3 substantially defines the total clearance of the tank 1.

Furthermore, the first container body 2 is fittable inside the housing seat 6 from top to bottom.

Conveniently, the tank 1 comprises at least one cover 14 mounted on the second container body 3 and movable between a first configuration of use, wherein it is moved closer to the second container body 3 and covers the housing seat 6, preventing the access thereto, and a second configuration of use, wherein the cover 14 is moved away from the second container body 3 and uncovers the housing seat 6, allowing access thereto.

Preferably, the cover 14 is pivoted movable in rotation to the second container body 3 between the first and the second configuration of use.

According to the invention, the reinforcing element 8, 9 is made in a single body piece with the second container body 3.

This solution allows the second container body 3 and the reinforcing element 8, 9 to be produced by means of a single manufacturing process.

Furthermore, the reinforcing element 8, 9 is hollow and defines a cavity 16. This solution allows significantly increasing the strength to deformation of the tank 1, while keeping its weight low.

In addition, the reinforcing element 8, 9 defines at least one access opening 15 to the cavity 16.

Preferably, the tank 1 comprises at least one closure element 19 fittable in a removable manner inside the opening 15 so as to prevent/allow the access thereto.

In particular, the cavity 16 coincides at least partly with the housing seat 6. Embodiments of the tank 1 cannot be ruled out wherein the cavity 16 coincides with the housing seat 6.

In this way, the first container body 2 is fitted in a removable manner inside the cavity 16 by means of the opening 15.

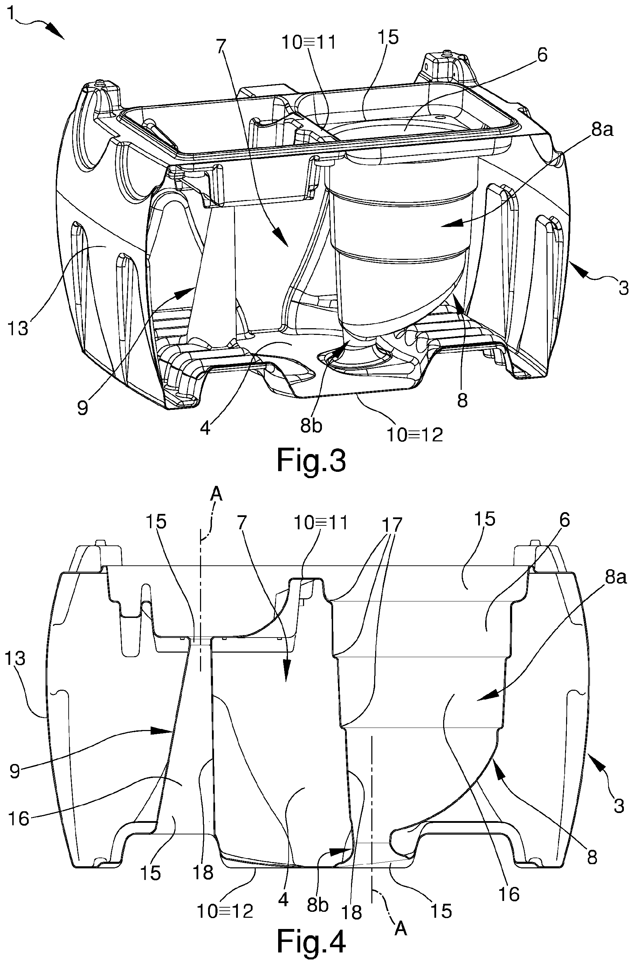

Advantageously, the reinforcing element 8, 9 defines a pair of openings 15 positioned opposite each other. In this way, the cavity 16 defines a through channel, as shown in Figure 4.

In particular, each of the openings 15 is made at a respective containment wall 10.

Furthermore, the reinforcing element 8, 9 extends longitudinally through the second containment volume 4 along a direction of longitudinal extension A. Preferably, the reinforcing element 8, 9 has a substantially conical or truncated-cone shape.

In addition, the reinforcing element 8, 9 comprises a lateral wall 18 surrounding the cavity 16 and converging substantially towards the direction of longitudinal extension A.

Preferably, the lateral wall 18 has a substantially curved shape.

Furthermore, the lateral wall 18 extends inside the second containment volume 4 between the upper wall 11 and the lower wall 12 and gradually converges towards the direction of longitudinal extension A as it approaches the upper wall 11 or the lower wall 12.

More specifically, the reinforcing element 8, 9 comprises at least one relief portion 17 made on the lateral wall 18 and arranged facing inside the cavity 16. In other words, the relief portion 17 protrudes inside the cavity 16. Advantageously, the relief portion 17 increases the strength of the reinforcing element 8, 9.

Preferably, the relief portion 17 surrounds the direction of longitudinal extension A. In this case, the relief portion 17 surrounds the direction of longitudinal extension A at 360°.

Conveniently, the reinforcing element 8, 9 comprises a plurality of relief portions 17.

Preferably, the relief portions 17 are carried out in sequence along the direction of longitudinal extension A.

Furthermore, each relief portion 17 extends longitudinally along the direction of longitudinal extension A by a predetermined length.

In more detail, each relief portion 17 extends longitudinally along the direction of longitudinal extension A by a predefined length other than the other predefined lengths of the other relief portions 17.

Alternative embodiments of the tank 1 cannot however be ruled out wherein the predefined distances are substantially equal to each other.

Specifically, each relief portion 17 is arranged adjacent to another relief portion 17 with respect to which it protrudes more inside the cavity 16 to at least partly define the lateral wall 18, as shown in Figure 4.

In other words, the conformation and arrangement of the relief portions 17 make a step between two adjacent relief portions 17.

According to the particular embodiment of the tank 1 shown in the figures, the tank 1 comprises a plurality of reinforcing elements 8, 9.

In particular, in this embodiment, the tank 1 comprises a first and second reinforcing element 8, 9 spaced apart from each other.

This solution will further increase the strength of the tank 1.

Conveniently, the first reinforcing element 8 comprises at least a first section 8a coinciding with the housing seat 6 and having a substantially complementary shape to the first container body 2.

Additionally, the first reinforcing element 8 comprises a second section 8b communicating with the first section 8a.

Appropriately, the first section 8a extends inside the second containment volume 4 from the upper wall 11, while the second section 8b extends inside the second containment volume 4 from the lower wall 12.

More specifically, the first reinforcing element 8 comprises the relief portions 17 made, according to the foregoing, along the first section 8a.

It has in practice been ascertained that the described invention achieves the intended objects.

In particular, the fact is emphasized that the reinforcing means make it possible to increase the strength to deformation and overpressure of the tank by reducing the weight thereof.

In addition, the reinforcing element allows the first container to be housed inside it, significantly reducing the size of the tank.

In addition, the reinforcing element makes it possible to create an internal structure that gives the tank considerable strength and robustness regardless of the application of additional reinforcing elements.

## Claims

1. Tank (1) for the transport of fuel, comprising:
- at least a first container body (2) defining at least a first containment volume of at least one work liquid,
- at least a second container body (3) defining at least a second containment volume (4) of fuel and provided with at least one housing seat (6) inside which said first container body (2) is fitted in a removable manner;
**characterized by** the fact that it comprises reinforcing means (7) of said second container body (3) provided with at least one reinforcing element (8, 9) positioned through inside said second containment volume (4) and adapted to counteract the deformation of said second container body (3); and
**characterized by** the fact that said reinforcing element (8, 9) is made in a single body piece with said second container body (3).

2. Tank (1) according to claim 1, **characterized by** the fact that said second container body (3) comprises at least one pair of containment walls (10) positioned substantially opposite each other to delimit at least partly the extension of the same second container body, said reinforcing element (8, 9) being positioned between said pair of containment walls (10).

3. Tank (1) according to one or more of the preceding claims, **characterized by** the fact that said reinforcing element (8, 9) is hollow and defines a cavity (16).

4. Tank (1) according to claim 3, **characterized by** the fact that said reinforcing element (8, 9) defines at least one access opening (15) to said cavity (16).

5. Tank (1) according to the claims 3 or 4, **characterized by** the fact that said cavity (16) coincides at least partly with said housing seat (6).

6. Tank (1) according to claim 4 or claim 5 when dependent on claim 4, **characterized by** the fact that said reinforcing element (8, 9) defines a pair of said openings (15) positioned opposite each other to define at least one through channel.

7. Tank (1) according to claim 6, **characterized by** the fact that each of said openings (15) is made at a corresponding containment wall (10).

8. Tank (1) according to one or more of the preceding claims, **characterized by** the fact that said reinforcing element (8, 9) extends longitudinally through said second containment volume (4) along a direction of longitudinal extension (A).

9. Tank (1) according to one or more of the preceding claims, **characterized by** the fact that said reinforcing element (8, 9) has a substantially conical or truncated-cone shape.

10. Tank (1) according to one or more of the claims 3-7 or the claims 8 and 9 when dependent on any of the claims 3-7, **characterized by** the fact that said reinforcing element (8, 9) comprises a lateral wall (18) surrounding said cavity (16) and converging substantially towards said direction of longitudinal extension (A).

11. Tank (1) according to one or more of the preceding claims, of the claims 3-7 or the claims 8-10 when dependent on any of the claims 3-7, **characterized by** the fact that said reinforcing element (8, 9) comprises at least one relief portion (17) made on said lateral wall (18) and protruding inside said cavity (16).

## Patentansprüche

1. Tank (1) für den Transport von Kraftstoff, umfassend:
- mindestens einen ersten Behälterkörper (2), der mindestens ein erstes Aufnahmevolumen für mindestens eine Arbeitsflüssigkeit definiert,
- mindestens einen zweiten Behälterkörper (3), der mindestens ein zweites Aufnahmevolumen (4) für Kraftstoff definiert und mit mindestens einem Aufnahmesitz (6) versehen ist, in den der erste Behälterkörper (2) herausnehmbar eingesetzt ist,
**dadurch gekennzeichnet, dass** er Verstärkungsmittel (7) des zweiten Behälterkörpers (3) umfasst, die mit mindestens einem Verstärkungselement (8, 9) versehen sind, das durch das Innere des zweiten Aufnahmevolumens (4) hindurch positioniert und ausgebildet ist, der Verformung des zweiten Behälterkörpers (3) entgegenzuwirken; und
**dadurch gekennzeichnet, dass** das Verstärkungselement (8, 9) aus einem einzigen Körperstück mit dem zweiten Behälterkörper (3) hergestellt ist.

2. Tank (1) nach Anspruch 1, **dadurch gekennzeichnet, dass** der zweite Behälterkörper (3) mindestens ein Paar von Begrenzungswänden (10) umfasst, die im Wesentlichen einander gegenüberliegend angeordnet sind, um zumindest teilweise die Ausdehnung desselben zweiten Behälterkörpers zu begrenzen, wobei das Verstärkungselement (8, 9) zwischen dem Paar von Begrenzungswänden (10) angeordnet ist.

3. Tank (1) nach einem oder mehreren der vorhergehenden Ansprüche, **dadurch gekennzeichnet, dass** das Verstärkungselement (8, 9) hohl ist und einen Hohlraum (16) definiert.

4. Tank (1) nach Anspruch 3, **dadurch gekennzeichnet, dass** das Verstärkungselement (8, 9) mindestens eine Zugangsöffnung (15) zu dem Hohlraum (16) definiert.

5. Tank (1) nach Anspruch 3 oder 4, **dadurch gekennzeichnet, dass** der Hohlraum (16) zumindest teilweise mit dem Aufnahmesitz (6) zusammenfällt.

6. Tank (1) nach Anspruch 4 oder Anspruch 5 wenn abhängig von Anspruch 4, **dadurch gekennzeichnet, dass** das Verstärkungselement (8, 9) ein Paar der Öffnungen (15) definiert, die einander gegenüberliegend angeordnet sind, um mindestens einen Durchgangskanal zu definieren.

7. Tank (1) nach Anspruch 6, **dadurch gekennzeichnet, dass** jede der Öffnungen (15) an einer entsprechenden Begrenzungswand (10) angebracht ist.

8. Tank (1) nach einem oder mehreren der vorhergehenden Ansprüche, **dadurch gekennzeichnet, dass** sich das Verstärkungselement (8, 9) in Längsrichtung durch das zweite Aufnahmevolumen (4) entlang einer Richtung der Längserstreckung (A) erstreckt.

9. Tank (1) nach einem oder mehreren der vorhergehenden Ansprüche, **dadurch gekennzeichnet, dass** das Verstärkungselement (8, 9) eine im Wesentlichen konische oder kegelstumpfförmige Form aufweist.

10. Tank (1) nach einem oder mehreren der Ansprüche 3-7 oder der Ansprüche 8 und 9, wenn abhängig von einem der Ansprüche 3-7, **dadurch gekennzeichnet, dass** das Verstärkungselement (8, 9) eine Seitenwand (18) aufweist, die den Hohlraum (16) umgibt und im Wesentlichen in Richtung der Längserstreckung (A) konvergiert.

11. Tank (1) nach einem oder mehreren der vorhergehenden Ansprüche, nach den Ansprüchen 3-7 oder den Ansprüchen 8-10, wenn abhängig von einem der Ansprüche 3-7, **dadurch gekennzeichnet, dass** das Verstärkungselement (8, 9) mindestens einen Entlastungsabschnitt (17) umfasst, der an der Seitenwand (18) ausgebildet ist und in den Hohlraum (16) hineinragt.

## Revendications

1. - Réservoir (1) pour le transport de carburant, comprenant :
- au moins un premier corps de contenant (2) définissant au moins un premier volume de confinement d'au moins un liquide de travail,
- au moins un second corps de contenant (3) définissant au moins un second volume de confinement (4) de carburant et comportant au moins un siège de réception (6) à l'intérieur duquel ledit premier corps de contenant (2) est monté d'une manière amovible ;
**caractérisé par le fait qu'**il comprend des moyens de renforcement (7) dudit second corps de contenant (3), comportant au moins un élément de renforcement (8, 9) positionné à l'intérieur dudit second volume de confinement (4) et agencé pour contrecarrer la déformation dudit second corps de contenant (3) ; et
**caractérisé par le fait que** ledit élément de renforcement (8, 9) est réalisé d'une seule pièce avec ledit second corps de contenant (3).

2. - Réservoir (1) selon la revendication 1, **caractérisé par le fait que** ledit second corps de contenant (3) comprend au moins une paire de parois de confinement (10) positionnées sensiblement l'une à l'opposé de l'autre pour délimiter au moins en partie l'extension de ce même second corps de contenant, ledit élément de renforcement (8, 9) étant positionné entre ladite paire de parois de confinement (10).

3. - Réservoir (1) selon une ou plusieurs des revendications précédentes, **caractérisé par le fait que** ledit élément de renforcement (8, 9) est creux et définit une cavité (16).

4. - Réservoir (1) selon la revendication 3, **caractérisé par le fait que** ledit élément de renforcement (8, 9) définit au moins une ouverture d'accès (15) à ladite cavité (16).

5. - Réservoir (1) selon la revendication 3 ou 4, **caractérisé par le fait que** ladite cavité (16) coïncide au moins en partie avec ledit siège de réception (6).

6. - Réservoir (1) selon la revendication 4 ou la revendication 5 lorsque prise en dépendance de la revendication 4, **caractérisé par le fait que** ledit élément de renforcement (8, 9) définit une paire desdites ouvertures (15) positionnées l'une à l'opposé de l'autre pour définir au moins un canal traversant.

7. - Réservoir (1) selon la revendication 6, **caractérisé par le fait que** chacune desdites ouvertures (15) est réalisée à une paroi de confinement (10) correspondante.

8. - Réservoir (1) selon une ou plusieurs des revendications précédentes, **caractérisé par le fait que** ledit élément de renforcement (8, 9) s'étend longitudinalement à travers ledit second volume de confinement (4) selon une direction d'extension longitudinale (A).

9. - Réservoir (1) selon une ou plusieurs des revendications précédentes, **caractérisé par le fait que** ledit élément de renforcement (8, 9) a une forme sensiblement conique ou tronconique.

10. - Réservoir (1) selon une ou plusieurs des revendications 3 à 7 ou des revendications 8 et 9 lorsque prises en dépendance de l'une quelconque des revendications 3 à 7, **caractérisé par le fait que** ledit élément de renforcement (8, 9) comprend une paroi latérale (18) entourant ladite cavité (16) et convergeant sensiblement vers ladite direction d'extension longitudinale (A).

11. - Réservoir (1) selon une ou plusieurs des revendications précédentes, des revendications 3 à 7 ou des revendications 8 à 10 lorsque prises en dépendance de l'une quelconque des revendications 3 à 7, **caractérisé par le fait que** ledit élément de renforcement (8, 9) comprend au moins une partie en relief (17) réalisée sur ladite paroi latérale (18) et faisant saillie à l'intérieur de ladite cavité (16).
